# EUROPÄISCHE PATENTSCHRIFT

(11) **EP 3 793 228 B1**
(45) Veröffentlichungstag und Bekanntmachung des Hinweises auf die Patenterteilung: **10.08.2022**
(21) Anmeldenummer: 19196927.8
(22) Anmeldetag: 12.09.2019
(51) Int. Cl.: H04W 4/70, H04W 4/60, H04W 12/06, H04L 9/32, H04W 12/043, H04W 12/61

(54) **VERFAHREN UND ANORDNUNG ZUM SCHÜTZEN VON IOT GERÄTEDATEN FÜR EINEN NUTZER BEI EINER NUTZUNG VON EIN ODER MEHREREN IOT GERÄTEN**
METHOD AND ASSEMBLY FOR PROTECTING IOT DEVICE DATA FOR A USER DURING THE USE OF ONE OR MORE IOT DEVICES
PROCÉDÉ ET DISPOSITIF DE PROTECTION DES DONNÉES D'APPAREILS IOT POUR UN UTILISATEUR LORS DE L'UTILISATION D'UN OU PLUSIEURS APPAREILS IOT

(43) Veröffentlichungstag der Anmeldung: 17.03.2021
(73) Patentinhaber: Deutsche Telekom AG, 53113 Bonn (DE)
(72) Erfinder: EFFELSBERG, Volker, 53639 Königswinter (DE); HENZE, Thomas, 53173 Bonn (DE)
(74) Vertreter: Raible Deissler Lehmann Patentanwälte PartG mbB

(56) Entgegenhaltungen:
- EP-A1- 3 511 848
- WO-A1-2019/136044
- US-A1- 2016 006 837
- US-A1- 2016 197 798
- US-A1- 2016 337 322
- US-A1- 2019 170 396

## Beschreibung

Die vorliegende Erfindung betrifft ein Verfahren und eine Anordnung zum Schützen von IoT Gerätedaten eines Nutzers bei einer Nutzung von ein oder mehreren IoT Geräten.

IoT (Internet-of-Things) Geräte, auch IoT Devices genannt, finden sich zunehmend im Alltag. Viele davon, wie zum Beispiel "Wearables" (Uhren, Kleidungssensoren, Fitnesstracker, Blutzuckermessgeräte, Herzschrittmacher etc.) sammeln IoT Daten, unter anderen auch höchst persönliche Daten der Nutzer, im Folgenden auch personenbezogene Daten genannt. Diese IoT Gerätedaten werden in der Regel direkt zu einer jeweiligen Cloud-Applikation, in der Regel eines Herstellers des jeweiligen IoT Devices, geschickt, die die Daten aufbereitet und dem Kunden bzw. Nutzer, in der Regel über eine App (kurz für Applikation) oder ein Web-Portal bspw. mittels eines Nutzerendgerätes zur Verfügung stellt. Eine Auswertung und Verarbeitung der loT Gerätedaten bleibt demnach in der Regel dem Applikationsanbieter/Hersteller selbst überlassen. So bilden sich sogenannte Insellösungen heraus. Ausnahmen hiervon sind sogenannte "ecosystem-weite" oder interoperable OTT (Over-the-top content) Applikationen, wie bspw. "Apple-Health" (https://www.apple.com/de/ios/health/) oder "Strava" (https://www.strava.com/?hl=de), die in einem fest vorgegebenen Format, Daten von verschiedenen IoT Devices aggregieren können.

Was mit den Daten beim Hersteller weiter passiert, bleibt im Wesentlichen dem Hersteller überlassen. Hier sind einem Missbrauch Tür und Tor geöffnet. Der Hersteller könnte die Daten zum Beispiel einem interessierten Arbeitgeber verkaufen, der seine Einstellungsentscheidung auf eine tiefgehende Aktivitäts- und Gesundheitsanalyse des Bewerbers fundieren möchte.

Daten, die durch eine Nutzung von IoT Geräten entstehen und von diesen bereitgestellt bzw. erfasst werden, sind für einen jeweiligen Nutzer bislang keinen anderen als den von dem Hersteller eines jeweiligen IoT Geräts vorgesehenen Nutzungs- und Auswertemöglichkeiten zugänglich machbar.

Allerdings ist ein für einen jeweiligen Nutzer nur bedingt kontrollierbarer und nicht selbst steuerbarer Umgang mit IoT Gerätedaten, insbesondere mit persönlichen bzw. personenbezogenen Daten, für den jeweiligen Nutzer nur wenig komfortabel. Ferner besteht die Gefahr, dass, wenn die erfassten Daten lediglich dem Hersteller des jeweiligen IoT Gerätes zur weiteren Nutzung und/oder Auswertung zur Verfügung stehen, es dem Nutzer in der Regel nicht klar ist, welche IoT Gerätedaten, insbesondere welche personenbezogenen Daten von ihm, von wem und wo gespeichert werden. So können Profile über den jeweiligen Nutzer immer detaillierter erstellt werden, ohne dass der jeweilige Nutzer eine Kontrolle über die erfassten IoT Gerätedaten, insbesondere seine personenbezogenen Daten hat. Zwar gibt es ein gesetzlich vorgeschriebenes Zweckentfremdungsverbot von personenbezogenen Daten und der Nutzer hat unter bestimmten Voraussetzungen auch das Recht auf Einsicht und Sperrung von personenbezogenen Daten, aber ohne Kenntnis, wo welche Daten hinterlegt sind, hilft dies dem jeweiligen Nutzer nur bedingt.

Mit der bereits existierenden europäischen Datenschutzgrundverordnung werden Regelungen geschaffen, die beschreiben, welche Daten wofür gespeichert werden dürfen. Allerdings wird auch hier nicht das Problem gelöst, dass ein jeweiliger Nutzer selbst eine Übersicht und Kontrolle über die bei Nutzung eines IoT Geräts anfallenden Daten, insbesondere seine personenbezogenen Daten verliert, da diese in der Regel über diverse Internet Services verteilt und für den jeweiligen Nutzer schwer einsehbar sind. Das Patentdokument EP 3 511 848 A1 offenbart ein Verfahren, wobei einem IoT-Gerät ein Token bereitgestellt wird, das als Authentifizierungsinformation beim Informationsaustausch (zB. Nutzerdaten) zwischen einem Cloud-Dienst und dem IoT-Gerät verwendet werden soll. Das Patentdokument US 2016/197798 A1 offenbart ein Verfahren, wobei IoT-Gerätedaten eines IoT-Geräts in einem Netzspeicher gespeichert werden und das IoT-Gerät dafür seine SIM-Karte benutzt. Das Patentdokument US 2019/170396 A1 offenbart ein Verfahren, wobei IoT-Gerätedaten eines IoT-Geräts (ein Wasserkocher) in einem Netzspeicher gespeichert werden.

Es war somit eine Aufgabe der vorliegenden Erfindung, eine Möglichkeit vorzusehen, einem Nutzer bei Nutzung von IoT Geräten eine Möglichkeit bereitzustellen, die dabei erfassten IoT Gerätedaten für den Nutzer kontrollierbar zu speichern.

Zur Lösung des voranstehend genannten Problems stellt die vorliegende Erfindung ein Verfahren und eine Anordnung zum Schützen von IoT Gerätedaten, insbesondere von personenbezogenen Daten eines Nutzers bei einer Nutzung von IoT Geräten mit den Merkmalen der jeweils unabhängigen Patentansprüche bereit. Weitere Ausgestaltungen sind den jeweiligen abhängigen Ansprüchen und der Beschreibung sowie den Figuren zu entnehmen.

Die vorliegende Erfindung stellt ein Verfahren zum Schützen von IoT Gerätedaten eines Nutzers, insbesondere von personenbezogenen Daten des Nutzers bereit, bei dem die loT Gerätedaten von mindestens einem loT Gerät mindestens eines ersten Anbieters, bei Nutzung durch den Nutzer, erfasst und in einem von einem als Übertragungsnetz implementierten Mobilfunknetz, d. h. allgemein formuliert einem IP Netz, bereitgestellten zentralen Datenspeicher gespeichert werden, wobei das mindestens eine IoT Gerät zu einer Authentifizierung des mindestens einen IoT Geräts und damit einer Autorisierung zur Speicherung der IoT Gerätedaten dem zentralen Datenspeicher eine Identifikationsnummer bereitstellt und der zentrale Datenspeicher die Identifikationsnummer prüft und dem mindestens einen IoT Gerät nach Verifizierung der Identifikationsnummer einen Speicherbereich zur Speicherung der IoT Gerätedaten bereitstellt.

Die oben genannten IoT Gerätedaten eines Nutzers sind Daten, die bei einer durch den Nutzer vorgenommenen Nutzung eines jeweiligen IoT Geräts entstehen bzw. anfallen und von dem jeweiligen IoT Gerät gesammelt, bereitgestellt bzw. erfasst werden. Diese IoT Gerätedaten des Nutzers werden im Rahmen der vorliegenden Offenbarung allgemein IoT Daten, IoT Device Daten oder IoT Gerätedaten des Nutzers (nämlich des Nutzers, der das jeweilige IoT Gerät benutzt, wenn die Daten anfallen) bezeichnet. Darunter fallen auch bei Nutzung des jeweiligen IoT Geräts vorliegende gerätespezifische Daten, wie bspw. Daten zum Batterie- bzw. Akkustatus. Eine durch den Nutzer vorgenommene Nutzung eines jeweiligen IoT Geräts umfasst dabei auch einen, ggf. längerfristigen oder dauerhaften, Betrieb des IoT Geräts zum Sammeln von IoT Daten für den Nutzer, wie bspw. der Betrieb einer Überwachungskamera, die von dem Nutzer definierte Bereiche überwacht. Demnach können die IoT Daten eines bzw. des Nutzers bzw. die IoT Gerätedaten eines bzw. des Nutzers auch als IoT Daten für einen bzw. den Nutzer bzw. als loT Gerätedaten für einen bzw. den Nutzer bezeichnet werden.

Dabei kann das mindestens eine IoT Gerät dem zentralen Datenspeicher die Identifikationsnummer über eine kommunikative Verbindung unmittelbar oder mittelbar mittels eines zwischengeschalteten mobilen Nutzerendgerätes, wie bspw. eines Smartphones, eines Tablets, o.ä. zur Verfügung stellen.

Eine kommunikative Verbindung beschreibt im Rahmen der vorliegenden Offenbarung eine drahtgebundene (wired), eine drahtlose (wireless) oder eine teils drahtgebundene teils drahtlose Verbindung zwischen mindestens zwei Kommunikationspartnern, über welche die Kommunikationspartner, hier das IoT Gerät, das mindestens eine Nutzerendgerät, der zentrale Datenspeicher, und ggf. ein digitaler Dienst Daten bei einem jeweils anderen an der jeweiligen kommunikativen Verbindung beteiligten Kommunikationspartner abrufen/einsehen, zumindest in eine Richtung übertragen und/oder wechselseitig austauschen können. Die Kommunikationspartner verfügen dabei über jeweilige geeignete Schnittstellen. Bei Verwendung der drahtlosen Verbindung bzw. der teils drahtlosen Verbindung werden im Bereich der drahtlosen Verbindung bzw. Verbindungsabschnitte Signale bzw. Daten per Funk, d. h. durch Modulation von elektromagnetischen Wellen mit Frequenzen unterhalb von sichtbarem Licht übertragen.

Die an dem erfindungsgemäßen Verfahren beteiligten Komponenten bzw. die von der erfindungsgemäßen Anordnung umfassten bzw. damit in Kommunikation stehenden Komponenten sind über jeweilige kommunikative Verbindungen miteinander verbunden bzw. vernetzt. Die Kommunikationspartner verfügen dabei über jeweilige geeignete Schnittstellen.

Bei dem IP Netz kann es sich um ein Mobilfunknetz von einem Mobilfunkbetreiber oder um jede andere Art von Netz handeln, über welches Signale über Kabel, Funk, optisch oder anderweitig elektromagnetisch übertragen werden können.

Die Formulierung "in einem von einem als Übertragungsnetz implementierten IP Netz bereitgestellten zentralen Datenspeicher" umfasst dabei sowohl, dass der zentrale Datenspeicher Teil des IP Netzes ist, als auch, dass der zentrale Datenspeicher über mindestens eine Schnittstelle mit dem IP Netz in kommunikativer Verbindung steht und darüber den zentralen Datenspeicher bereitstellt.

In einer möglichen Ausgestaltung ist dabei der zentrale Datenspeicher ein Bestandteil bzw. eine Komponente des IP Netzes, das bspw. als Mobilfunknetz ausgebildet ist. In dazu alternativer Ausgestaltung betreibt ein weiterer Dienstleister den zentralen Datenspeicher, welcher dann über eine oder mehrere geeignete Schnittstellen mit dem jeweiligen IP Netz, insbesondere mit einem jeweiligen Mobilfunknetz in kommunikativer Verbindung steht und darüber sowohl die Authentifizierung des mindestens einen IoT Geräts und damit die Autorisierung zur Speicherung der IoT Gerätedaten durchgeführt werden als auch die von dem mindestens einen IoT Gerät des mindestens einen ersten Anbieters erfassten IoT Daten abgespeichert werden. Ferner ist es denkbar, dass nach Autorisierung ein Zugang zu den IoT Daten und ggf. ein Auslesen der IoT Daten durch mindestens einen Dienst mindestens eines zweiten Anbieters ermöglicht wird. So muss nicht jeder Netzbetreiber, im Falle eines Mobilfunknetzes nicht jeder Mobilfunkbetreiber, seinen eigenen zentralen Datenspeicher betreiben. Ferner kann auch der Nutzer ggf. einen (mobilfunk)netzübergreifenden Betreiber des zentralen Datenspeichers wählen, um z.B. alle seine IoT Device Daten auch bei unterschiedlichen Telekommunikationsverträgen (Mobilfunkverträgen) am gleichen Ort zu bündeln.

Gemäß einer möglichen Ausgestaltung des erfindungsgemäßen Verfahrens nutzt das mindestens eine IoT Gerät zur Authentifizierung bei dem Mobilfunknetz ein dem mindestens einen IoT Gerät zugeordnetes SIM(Subscriber Identity Module)-Profil.

In einer ergänzenden oder alternativen Ausgestaltung des erfindungsgemäßen Verfahrens nutzt das mindestens eine IoT Gerät zur Authentifizierung bei dem Mobilfunknetz ein einem mit dem mindestens einen IoT Gerät über eine Anwendung in kommunikativer Verbindung stehenden mobilen Nutzerendgerät zugeordnetes SIM-Profil. Das bedeutet, dass auf dem mobilen Nutzerendgerät eine Anwendung bzw. Applikation implementiert ist, mit deren Hilfe das IoT Gerät mittels des mobilen Nutzerendgerätes angesteuert werden kann.

Dabei stellt das IoT(Internet-of-Things) Gerät bspw. mittels Bluetooth eine Verbindung mit einer SIM-Karte eines Bluetooth-fähigen Nutzerendgerätes, bspw. eines Mobiltelefons her. Dadurch kann das IoT Gerät die auf der SIM-Karte des Nutzerendgerätes vorhandenen Zugangsdaten (im Prinzip eine Netzzugangsberechtigung gemäß einem jeweiligen Mobilfunkvertrag) ggf. mit eigener GSM-Sende- und Empfangseinheit nutzen. Daten und Mitteilungen werden dann über die Sende- und Empfangseinheit des IoT Geräts geleitet.

Eine SIM bzw. eine SIM-Karte (vom englischen Subscriber Identity Module für "Teilnehmer-Identitätsmodul") ist eine Chipkarte, die einem mobilen Nutzerendgerät oder einem jeweiligen IoT Gerät zugeordnet und in der Regel in dieses eingesteckt wird und zur Identifikation des Nutzers bzw. seines Nutzerendgeräts bzw. des von ihm genutzten IoT Geräts im Netz dient. Darüber werden mobile Datenanschlüsse zur Verfügung gestellt. Das SIM ist ein kleiner Prozessor mit Speicher (üblicherweise im ID-000-Format, das aus einer ID-1-Format-Karte herausgebrochen wird). Durch eine veränderbare PIN kann es vor unbefugter Benutzung geschützt werden.

In weiterer Ausgestaltung stellt das mindestens eine IoT Gerät oder das mobile Nutzerendgerät dem zentralen Datenspeicher eine Identifikationsnummer bereit. Die bereitgestellte Identifikationsnummer wird von einer mit dem zentralen Datenspeicher in kommunikativer Verbindung stehender Verwaltungseinheit (IDM - Identity Management) des Netzes überprüft, wobei die Verwaltungseinheit dem zentralen Datenspeicher eine Nachricht bezüglich einer Verifizierung oder einer Nicht-Verifizierung der Identifikationsnummer übermittelt.

Auf der SIM ist die IMSI, d. h. die International Mobile Subscriber Identity (deutsch: Internationale Mobilfunk-Teilnehmerkennung) gespeichert, die in GSM-, UMTS- und LTE-Mobilfunknetzen einer eindeutigen Identifizierung der Netzteilnehmer, d. h. des Nutzers bzw. des IoT Geräts bzw. des mobilen Nutzerendgeräts (interne Teilnehmerkennung) dient. Die IMSI-Nummer wird weltweit einmalig pro SIM von den Mobilfunknetzbetreibern vergeben. Dabei hat die IMSI nichts mit einer Telefonnummer zu tun, die ebenfalls der SIM-Karte zugeordnet ist.

Gemäß weiterer Ausgestaltung des erfindungsgemäßen Verfahrens generiert der zentrale Datenspeicher nach Verifizierung der Identifikationsnummer jeweils einen zumindest temporären Zugangsschlüssel für das mindestens eine IoT Gerät und übermittelt diesen an das mindestens eine IoT Gerät, wodurch das mindestens eine IoT Gerät dazu konfiguriert wird, die erfassten IoT Gerätedaten auf dem zentralen Datenspeicher in dem dem mindestens einen loT Gerät jeweils zugewiesenen Speicherbereich zu speichern. Falls der Zugangsschlüssel temporär gültig ist, bedeutet dies, dass das IoT Gerät für die Dauer seiner Nutzung und Erfassung der IoT Gerätedaten Zugang zu dem zentralen Datenspeicher hat und die erfassten IoT Gerätedaten in dem dem IoT Gerät zugeordneten Speicherbereich abspeichern kann. Nach Ablauf der Nutzung ist der Zugangsschlüssel ungültig und das IoT Gerät kann nicht mehr auf den zentralen Datenspeicher zugreifen. Erst bei einer Wiederaufnahme einer weiteren Nutzung, erhält das IoT Gerät wiederum einen neuen temporären Zugangsschlüssel.

Der Zugangsschlüssel kann dabei als Zufallszahl durch einen Zufallsgenerator, der von dem zentralen Datenspeicher umfasst oder mit diesem in kommunikativer Verbindung steht, generiert werden, wobei die Zufallszahl auf Basis der IMSI, einer MAC-Adresse und eines Zeitstempels, bezogen auf die aktuelle Nutzung des jeweiligen IoT Geräts, erzeugt wird. Die MAC-Adresse (Media-Access-Control-Adresse) ist eine Hardware-Adresse, die als eindeutiger physischer Identifikator eines jeweiligen Geräts, hier des jeweiligen IoT Geräts, in einem das IP-Netz umfassenden Rechnernetzes dient.

Gemäß weiterer Ausgestaltung des erfindungsgemäßen Verfahrens kann der Nutzer auf die gespeicherten IoT Gerätedaten zumindest lesend und löschend zugreifen. Das bedeutet, dass der Nutzer Zugang zu den auf dem zentralen Datenspeicher für ihn gespeicherten IoT Daten hat und zwar, um diese zu lesen und/oder um diese zu löschen.

In weiterer Ausgestaltung des erfindungsgemäßen Verfahrens wird einem jeweiligen loT Gerät als Speicherbereich eine gerätespezifische Sektion in dem zentralen Datenspeicher zur Speicherung der von dem jeweiligen IoT Gerät erfassten IoT Gerätedaten zugeordnet. Es ist denkbar, dass in einer jeweiligen einem jeweiligen IoT Gerät zugeordneten Sektion, für den jeweiligen das jeweilige IoT Gerät nutzenden Nutzer ein jeweiliger Speicherbereich vorgesehen wird, in dem die von dem jeweiligen IoT Gerät erfassten IoT Daten des Nutzers gespeichert werden, oder dass in einem dem jeweiligen Nutzer in dem Datenspeicher zugeordneten Speicherbereich für ein jeweiliges von dem jeweiligen Nutzer genutztes IoT Gerät eine gerätespezifische Sektion vorgesehen wird.

Ferner ist es dabei denkbar, dass ein jeweiliges IoT Gerät einer Mehrzahl von IoT Geräten jeweilige IoT Gerätedaten, darunter auch personenbezogene Daten erfasst und in der jeweiligen dem jeweiligen IoT Gerät zugeordneten Sektion, insbesondere gerätespezifisch abspeichert, was bedeutet, dass das jeweilige IoT Gerät definiert, wie die IoT Gerätedaten, insbesondere die personenbezogenen Daten des Nutzers, für den Nutzer in dem dem jeweiligen IoT Gerät zugeordneten Sektor in dem Sektor gespeichert werden. Dabei erfasst ein jeweiliges IoT Gerät einer Mehrzahl von IoT Geräten jeweilige IoT Gerätedaten, darunter auch personenbezogene Daten und speichert die erfassten Daten in der jeweiligen dem jeweiligen IoT Gerät zugeordneten Sektion, insbesondere gerätespezifisch, d. h. bspw. in einem von dem IoT Gerät vorgesehenen Format, ab.

In weiterer Ausgestaltung des erfindungsgemäßen Verfahrens erhält ein digitaler Dienst mindestens eines zweiten Anbieters nach Autorisierung einen Zugang zu zumindest einer Auswahl von den auf dem zentralen Datenspeicher gespeicherten und von dem mindestens einen IoT Gerät erfassten IoT Gerätedaten. Der digitale Dienst kann dann zumindest einen Teil der Daten aggregieren, verknüpfen, auswerten und dem Nutzer mittels eines Nutzerendgerätes ein Ergebnis der Auswertung der aggregierten und miteinander verknüpften Daten bereitstellen. Das Ergebnis der Auswertung kann dabei mittels einer Ausgabeeinheit visuell, bspw. mittels eines Displays, und/oder akustisch, bspw. mittels eines Lautsprechers, und/oder haptisch bereitgestellt werden. Ferner kann auch das Ergebnis der Auswertung wiederum in einem dem jeweiligen Dienst zugeordneten Sektor des zentralen Datenspeichers gespeichert werden.

Der digitale Dienst des mindestens einen zweiten Anbieters legt dann die analysierten und ausgewerteten IoT Gerätedaten ebenfalls in dem zentralen, insbesondere in einem dem digitalen Dienst zugeordneten Sektor des zentralen Datenspeichers, insbesondere dienstspezifisch ab.

Gemäß einer noch weiteren Ausführungsform des erfindungsgemäßen Verfahrens gibt der Nutzer, insbesondere durch eine Nutzereingabe in das mindestens eine Nutzerendgerät, vor, welcher mindestens eine Dienst des mindestens einen Anbieters durch jeweilige Autorisierung Zugang zu mindestens einer jeweiligen Auswahl von den auf dem zentralen Datenspeicher für den Nutzer gespeicherten Daten des mindestens einen IoT Geräts erhält.

Dabei kann ferner vorgesehen sein, dass ein jeweiliger Dienst nur während einer aktiven Sitzung/Nutzung des Dienstes auf Anfrage und nach einer Freigabe seitens des den jeweiligen Dienst nutzenden Nutzers über mindestens eine definierte Schnittstelle auf die mindestens eine jeweilige Auswahl von den auf dem zentralen Datenspeicher für den Nutzer gespeicherten Daten des mindestens einen IoT Geräts lesend zugreifen kann.

Dabei wird die Anfrage seitens des jeweiligen Dienstes dem Nutzer auf einer Anzeigeeinheit des Nutzerendgerätes, mit dem der Nutzer den jeweiligen Dienst zuvor über das IP-Netz aus dem Internet angefordert hat, angezeigt. Der Nutzer übermittelt mittels des Nutzerendgeräts die Freigabe an den zentralen Datenspeicher. Die Anzeige und/oder die Freigabe können dabei je nach Ausgestaltung des Endgeräts optisch und/oder akustisch erfolgen. Als Endgerät bzw. als Nutzerendgerät kann ein mobiles Endgerät, wie bspw. ein Smartphone, ein Tablet, ein Laptop oder ein PDA, verwendet werden. Aber auch jedes andere geeignete Endgerät kann eingesetzt werden.

Nach Eingang der Freigabe für den jeweiligen Dienst generiert der zentrale Datenspeicher einen temporären, d. h. für die Dauer einer jeweilig aktuellen Sitzung des jeweiligen Dienstes, Zugangsschlüssel für die mindestens eine jeweilige Auswahl von den auf dem zentralen Datenspeicher gespeicherten IoT Daten des mindestens einen IoT Geräts und übermittelt diesen an das Nutzerendgerät, das den temporären Zugangsschlüssel an den jeweiligen Dienst weiterleitet, wobei der temporäre Zugangsschlüssel nach Beendigung der aktiven Sitzung des jeweiligen Dienstes von dem zentralen Datenspeicher ungültig gemacht wird. In weiterer Ausgestaltung speichert der jeweilige Dienst zum Abschluss der jeweilig aktuellen Sitzung für eine nachfolgende Sitzung benötigte Daten in dem zentralen Datenspeicher, insbesondere in einem dem jeweiligen Dienst zugeordneten Sektor und löscht alle lokal bei dem jeweiligen Dienst zwischengespeicherten IoT Gerätedaten.

Ferner betrifft die vorliegenden Erfindung eine Anordnung zum Schützen von IoT Gerätedaten eines Nutzers, insbesondere personenbezogenen Daten des Nutzers, mit mindestens einem IoT Gerät eines ersten Anbieters, das dazu konfiguriert ist, für den Nutzer IoT Gerätedaten, darunter auch personenbezogene Daten des Nutzers zu erfassen, sich bei einem von einem als Übertragungsnetz implementierten Mobilfunknetz (IP Netz) bereitgestellten zentralen Datenspeicher zur Speicherung der IoT Gerätedaten zu authentifizieren und nach Authentifizierung die erfassten IoT Gerätedaten in dem zentralen Datenspeicher zu speichern, mit dem zentralen Datenspeicher, der dazu ausgelegt ist, die von dem mindestens einen IoT Gerät erfassten Daten zu speichern und mindestens eine Auswahl der gespeicherten Daten für mindestens einen digitalen Dienst von mindestens einem zweiten Anbieter nach Autorisierung abrufbar zugänglich zu machen, wobei das mindestens eine IoT Gerät dazu konfiguriert ist, zur Authentifizierung des mindestens einen IoT Geräts (und damit einer Autorisierung zur Speicherung der IoT Gerätedaten) dem zentralen Datenspeicher eine Identifikationsnummer bereitzustellen und der zentrale Datenspeicher dazu konfiguriert ist, die Identifikationsnummer zu prüfen und dem mindestens einen IoT Gerät nach Verifizierung der Identifikationsnummer einen Speicherbereich zur Speicherung der IoT Gerätedaten bereitzustellen.

In Ausgestaltung umfasst die Anordnung den mindestens einen digitalen Dienst des mindestens einen zweiten Anbieters, wobei der digitale Dienst dazu konfiguriert ist, nach Autorisierung einen Zugang zu der mindestens einen Auswahl von den auf dem zentralen Datenspeicher gespeicherten Daten des mindestens einen IoT Geräts zu erhalten und die Auswahl von Daten abzurufen und die abgerufenen Daten, insbesondere geräteübergreifend, zu analysieren, auszuwerten und dem Nutzer mittels eines Nutzerendgerätes bereitzustellen.

In noch weiterer Ausgestaltung der erfindungsgemäßen Anordnung ist der zentrale Datenspeicher dazu konfiguriert, nach Verifizierung der Identifikationsnummer einen zumindest temporären, d. h. für die Dauer einer jeweilig aktuellen Nutzung des jeweiligen IoT Geräts, Zugangsschlüssel zur Speicherung von von dem jeweiligen IoT Gerät erfassten IoT Gerätedaten zu generieren und an das IoT Gerät des Nutzers zu übermitteln, und den temporären Zugangsschlüssel nach Beendigung der aktuellen Nutzung für das jeweilige IoT Gerät ungültig zu machen. Der Zugangsschlüssel kann mittels eines Zufallsgenerator erstellt werden. Der Zufallsgenerator kann in die Anordnung, insbesondere in den von der Anordnung umfassten zentralen Datenspeicher integriert sein oder zumindest in kommunikativer Verbindung mit der Anordnung bzw. dem zentralen Datenspeicher stehen und somit der Anordnung bzw. dem zentralen Datenspeicher den generierten Zugangsschlüssel zur Verfügung stellen. Wie voranstehend bereits erläutert, kann der Zugangsschlüssel auf Basis der dem IoT Gerät bzw. der dem mobilen Nutzerendgerät, über welches das IoT Gerät Zugang zu dem zentralen Datenspeicher erhält, zugordneten IMSI, der MAC-Adresse des IoT Geräts bzw. des mobilen Nutzerendgeräts und/oder des Zeitstempels der aktuellen Nutzung des IoT Geräts generiert werden.

Die erfindungsgemäße Anordnung ist insbesondere dazu ausgelegt, zumindest eine Ausführungsform des voranstehend beschriebenen erfindungsgemäßen Verfahrens auszuführen.

Ferner betrifft die vorliegende Erfindung ein Computerprogrammprodukt mit einem computerlesbaren Medium und einem auf dem computerlesbaren Medium gespeicherten Computerprogramm mit Programmcodemitteln, die dazu konfiguriert sind, bei Ablauf des Computerprogramms auf einer Recheneinheit, zumindest eine Ausführungsform des erfindungsgemäßen Verfahrens, insbesondere unter Verwendung mindestens einer Ausführungsform der voranstehend beschriebenen erfindungsgemäßen Anordnung auszuführen.

Ein Vorteil des erfindungsgemäß vorgesehenen bzw. bereitgestellten zentralen Datenspeichers liegt darin, dass ein Nutzer eine Kontrolle über seine personenbezogenen bzw. persönlichen Daten, die durch eine jeweilige Nutzung eines IoT Geräts automatisch entstehen und bei einer jeweiligen Dienstenutzung benötigt und abgerufen werden, erlangt. Dies wird erfindungsgemäß dadurch erreicht, dass die IoT Gerätedaten von einem IoT Gerät und für einen jeweiligen digitalen Dienst bzw. Internet Service zentral an einem Ort, nämlich in dem zentralen Datenspeicher für einen jeweiligen Nutzer, gehalten werden, auf den der jeweilige Nutzer selbst zugreifen kann und einem Dienst seiner Wahl zur Nutzung, bspw. Auswertung durch eine geeignet vorgesehene Autorisierung Zugang zu zumindest einer Auswahl von Daten, die auf dem zentralen Datenspeicher für ihn gespeichert sind, gewähren kann, ohne dass der Nutzer dabei auf eine von dem jeweiligen Gerätehersteller vorgesehene und vordefinierte Auswertung, umfassend auch eine durch vordefinierte Schnittstellen ermöglichte Auswertung durch bekannte Aggregationsanwendungen, beschränkt wäre.

Der zentrale Datenspeicher kann bspw. in einer Client-Server-Umgebung oder in einer webbasierten Umgebung, wie einer Cloud-Computing Umgebung lokalisiert bzw. verortet sein bzw. werden. Der zentrale Datenspeicher ist dabei so konfiguriert, dass einem jeweiligen Nutzer (auf Anfrage) ein jeweiliger Speicherbereich zugeordnet ist bzw. wird, in welchem IoT Gerätedaten für den jeweiligen Nutzer, insbesondere personenbezogene Daten des jeweiligen Nutzers, insbesondere die von einem IoT Gerät erfassten IoT Gerätedaten abgelegt bzw. gespeichert werden können.

Ein Kernelement des erfindungsgemäßen Verfahrens ist die Verwendung des zentralen Datenspeichers, in dem alle IoT Gerätedaten, damit auch alle persönlichen Daten, insbesondere die von einem jeweiligen IoT Gerät erfassten personenbezogenen Daten, eines jeweiligen Nutzers gehalten, d. h. gespeichert, und dort von dem jeweiligen Nutzer verwaltet, d. h. eingesehen und/oder gelöscht und ggf. auch verändert werden können. IoT Geräte und digitale Dienste, die den erfindungsgemäß verwendeten zentralen Datenspeicher unterstützen, legen dort alle IoT Gerätedaten, die sie erfassen ab bzw. rufen von dort alle IoT Gerätedaten, die sie zur Erbringung des jeweiligen digitalen Dienstes, bspw. einer von dem jeweiligen Nutzer gewünschten Auswertung benötigen, ab. Der jeweilige Dienst kann ggf. auch die bei Durchführung des jeweiligen digitalen Dienstes entstehenden Daten in dem zentralen Datenspeicher abspeichern. Zugleich ist es jedoch erforderlich, dass die digitalen Dienste bzw. die digitalen Dienstleister der jeweiligen digitalen Dienste bzw. die jeweiligen IoT Geräte bzw. deren Hersteller sich dazu verpflichten, IoT Gerätedaten, insbesondere personenbezogene Daten eines jeweiligen Nutzers, nicht lokal zu speichern, zumindest nicht dauerhaft, sondern nur nach wiederum erfolgter Freigabe durch den jeweiligen Nutzer von dem zentralen Datenspeicher auszulesen. Sowohl das jeweilige IoT Gerät als auch ein auf die Daten zugreifender digitaler Dienst müssen sich allerdings vor Zugriff auf den zentralen Datenspeicher, sei es, um dort (seitens des jeweiligen IoT Geräts) Daten abzuspeichern oder von dort (seitens des digitalen Dienstes) Daten auszulesen, gegenüber dem zentralen Datenspeicher authentifizieren. Dies kann, wie voranstehend erläutert, mittels bekannter Mobilfunk-Authentifizierung bei einem IoT Gerät mit eigenem SIM-Profil unmittelbar oder bei nicht vorhandenem eigenem SIM-Profil mittelbar über das einem Nutzerendgerät zugeordnete SIM-Profil vonstatten gehen, wobei im letztgenannten Fall, das IoT Gerät, bspw. über Bluetooth, mit dem Nutzerendgerät in kommunikative Verbindung steht oder treten muss.

Falls der Nutzer zur Auswertung seiner von einem IoT Gerät erfassten IoT Gerätedaten eine von dem Hersteller des IoT Gerätes zur Verfügung gestellte Auswertung auswählt, so entspricht der erste Anbieter, d. h. der Hersteller des IoT Gerätes, dem zweiten Anbieter, d. h. dem Anbieter des digitalen Dienstes zur Auswertung.

Durch die sichere zentrale Speicherung der Daten seiner loT Geräte bzw. loT Devices in dem zentralen Datenspeicher bekommt der Kunde bzw. Nutzer die Kontrolle über seine Daten zurück. Er weiß, wo die Daten liegen, kann sie dort einsehen und jederzeit löschen. Zudem bekommt er mehr Freiheit über die Nutzung seiner Daten, indem er Drittanbieter-Applikationen Zugriff auf ausgewählte Sektionen des zentralen Datenspeichers bzw. seines Speicherbereichs auf dem zentralen Datenspeicher gewährt. Damit kann er nicht nur eine Anwendung/Applikation des Herstellers für die Auswertung seiner Daten nutzen (Insellösung), sondern auch alternative Anwendungen von Drittanbietern, die die Daten mehrerer IoT Geräte/loT Devices hersteller- bzw. geräteübergreifend heranziehen, um aus einer neuen Verknüpfung unterschiedlicher Datenquellen neue Erkenntnisse zu gewinnen. Der zentrale Datenspeicher bietet die Möglichkeit der freien Entwicklung einer Vielzahl von Mehrwertdiensten, basierend auf den Daten der IoT Devices, ohne die Kontrolle über die IoT Gerätedaten, insbesondere die personenbezogenen Daten, dem Nutzer zu entziehen.

Im Rahmen der vorliegenden Offenbarung werden die Begriffe "Sektor" und "Sektion" synonym zueinander verwendet.

Es ist weiterhin vorgesehen, dass neben den personenbezogenen von dem mindestens einen IoT Gerät erfassten Daten und ggf. den von dem digitalen Dienst des mindestens einen zweiten Anbieters analysierten und ausgewerteten Daten, die für den Nutzer zumindest lesend und löschend zugänglich gespeichert sind, generische Daten des Nutzers in einem weiteren Sektor des zentralen Datenspeichers für den Nutzer lesend, schreibend und löschend zugänglich gespeichert werden. Das bedeutet, dass der Nutzer die Möglichkeit hat, auf die seine Person betreffenden allgemein gültigen Daten sowohl lesend als auch schreibend und löschend zuzugreifen. Er kann somit sein digitales Erscheinungsbild, was durch die generischen Daten zum Ausdruck kommen soll, durch einen schreibenden Zugriff verändern bzw. aktiv beeinflussen. Somit kann er aktiv sein Recht auf informationelle Selbstbestimmung ausüben.

Im Rahmen der vorliegenden Offenbarung wird der für den Nutzer vorgesehene Speicherbereich auf dem zentralen Datenspeicher auch übergreifend einfach als der zentrale Datenspeicher bezeichnet.

Der zentrale Datenspeicher bietet sowohl für jeweilige IoT Geräte als auch für jeweilige digitale Dienste Schnittstellen an, über die ein jeweiliges IoT Gerät erfasste Daten in dem zentralen Datenspeicher abspeichern kann und der jeweilige Dienst auf zumindest eine Auswahl der erfassten Daten nach vorangegangener Freigabe durch den jeweiligen Nutzer zur Auswertung der erfassten Daten zugreifen kann. Ein jeweiliger digitaler Dienst darf während der aktiven Nutzungsphase auf durch den Nutzer freigegebene Datenbereiche, d. h. sowohl auf generische Daten des Nutzers, soweit diese ggf. zur Auswertung der auszuwertenden und von dem mindestens einen IoT Gerät erfassten Daten nötig sind, wie auch auf die auszuwertenden und von dem mindestens einen IoT Gerät erfassten Daten zugreifen und nach Abschluss der Nutzung Daten für die nächste Nutzung dort ablegen, insbesondere in einem dem jeweiligen Dienst zugeordneten Sektor.

In dem jeweiligen einem jeweiligen IoT Gerät zugeordneten Sektor des zentralen Datenspeichers für den jeweiligen Nutzer darf ein jeweiliger Nutzer auf die IoT Gerätedaten, insbesondere auf seine personenbezogenen Daten, zumindest lesend und löschend zugreifen.

Die generischen Daten, die in dem weiteren Sektor für den jeweiligen Nutzer in dem zentralen Datenspeicher gespeichert sind bzw. werden, enthalten allgemein persönliche Daten des jeweiligen Nutzers, wie bspw.:
1. Name
2. Adresse
3. Alter
4. Geschlecht
5. Materialstatus
6. Finanzstatus
7. Beschäftigungsstatus
8. Arbeitgeber
9. Portraitbild
10. Freunde
11. Beziehungen
12. Aktivitäten
13. Interessen

Diese generischen Daten können auf Seiten des Nutzers selbst geschrieben, gelesen und aus dem dem Nutzer zugeordneten weiteren Sektor des zentralen Datenspeichers gelöscht werden.

In noch fortgesetzt weiterer Ausgestaltung der erfindungsgemäßen Anordnung ist für einen jeweiligen Nutzer für eine Anzahl von von dem Nutzer genutzten IoT Geräten eine gleiche Anzahl von Sektoren bereitgestellt und jeweils ein Sektor jeweils einem jeweiligen dieser IoT Geräte der Anzahl von IoT Geräten zugeordnet, wobei der dem jeweiligen IoT Gerät zugeordnete Sektor ausgebildet ist, die von dem jeweiligen IoT Gerät erfassten Daten zu speichern, wobei ein jeweiliges IoT Gerät definiert, welche Daten des Nutzers und wie die erfassten Daten des Nutzers in dem jeweiligen dem jeweiligen IoT Gerät zugeordneten Sektor in dem mindestens einen Sektor zu speichern sind. Eine Zuordnung eines jeweiligen Sektors zu einem jeweiligen IoT Gerät erfolgt dynamisch, d. h. immer dann, wenn der Nutzer das jeweilige IoT Gerät nutzt und eine Speicherung der von dem jeweiligen IoT Gerät erfassten Daten in dem zentralen Datenspeicher bei dem zentralen Datenspeicher, bspw. über eine Applikation mittels eines Nutzerendgeräts anfordert. Dazu wird dann für die Dauer der Nutzung des jeweiligen IoT Geräts ein temporärer Zugangsschlüssel für das jeweilige IoT Gerät generiert, mit dessen Hilfe das jeweilige IoT Gerät die von ihm erfassten Daten in dem zentralen Datenspeicher bzw. in dem dem jeweiligen IoT Gerät zugeordneten Sektor abspeichern kann.

Der zentrale Datenspeicher weist mindestens eine erste Schnittstelle auf, über welche das mindestens eine IoT Gerät des ersten Anbieters von ihm erfasste Daten an den zentralen Datenspeicher übertragen und dort in einem, insbesondere dem mindestens einen loT Gerät jeweils zugeordneten Sektor speichern kann. Ferner weist der zentrale Datenspeicher mindestens eine zweite Schnittstelle auf, über welche der mindestens eine digitale Dienst des mindestens einen zweiten Anbieters nach Autorisierung von dem mindestens einen digitalen Dienst auszuwertende und von dem mindestens einen IoT Gerät erfasste Daten abrufen kann.

Das hier im Rahmen der vorliegenden Offenbarung beschriebene Computerprogramm kann in einem internen Computerspeicher oder in einem nichtflüchtigen computerlesbaren Medium gespeichert bzw. abrufbar hinterlegt sein.

Jedes von dem Nutzer genutzte IoT Gerät bekommt für den Nutzer einen eigenen Daten-Sektor auf dem zentralen Datenspeicher bzw. -server, die es mit für den Nutzer mit IoT Gerätedaten, insbesondere mit personenbezogenen Daten des Nutzers beschreiben darf. Der Kunde bzw. Nutzer wählt selbst, durch welche App, d. h. Anwendung bzw. Applikation, seine Daten weiterbearbeitet, bspw. ausgewertet und zur Anzeige gebracht werden, i.e. durch eine OEM-APP des IoT Geräteherstellers oder wahlweise durch eine alternative Drittanbieter-Applikation.

Dabei wird erfindungsgemäß sichergestellt, dass die IoT Gerätedaten, insbesondere die persönlichen Daten, d. h. die personenbezogenen Daten des Nutzers, die von dem IoT Gerät bzw. IoT Device unter der Kontrolle des Nutzers bleiben. Der Nutzer entscheidet darüber, wie und in welcher Weise er oder andere auf diese Daten zugreifen können und er ist in der Lage, die Daten jederzeit zu löschen.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird anhand eines Ausführungsbeispiels in der Zeichnung schematisch dargestellt und wird im Folgenden unter Bezugnahme auf die Zeichnung ausführlich beschrieben.

Figur 1 zeigt in schematischer Darstellung eine Ausführungsform der erfindungsgemäß vorgesehenen bzw. bereitgestellten Anordnung.

Figur 2 zeigt ein Flussdiagramm für eine mögliche Nutzung einer Ausführungsform der erfindungsgemäßen Anordnung.

Die Figuren werden figurenübergreifend beschrieben, gleichen Komponenten bzw. Verfahrensschritten sind gleiche Bezugszeichen zugeordnet.

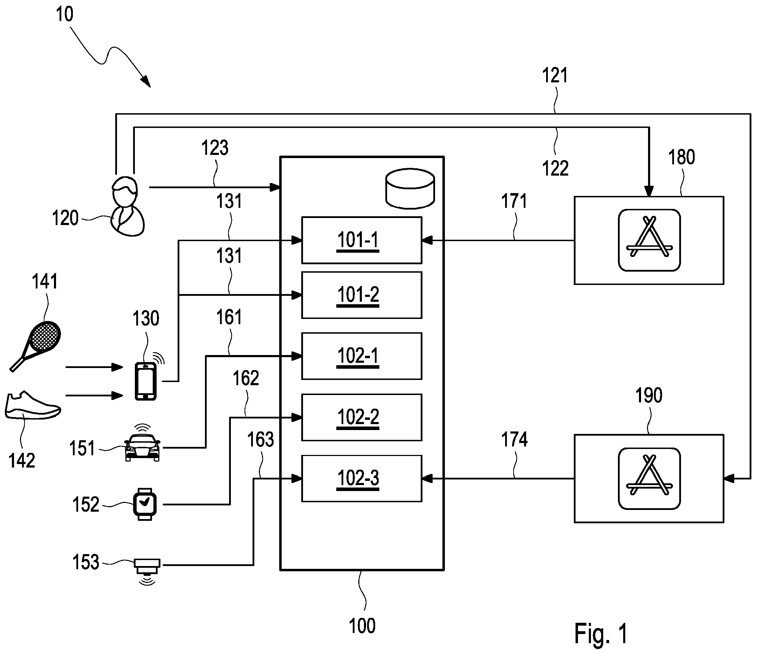

In Figur 1 ist eine Ausführungsform einer erfindungsgemäßen Anordnung 10 gezeigt. Die Anordnung 10 umfasst einen zentralen Datenspeicher 100 und eine Mehrzahl von IoT Geräten 141, 142, 151, 152, 153, die jeweilig von einem jeweiligen ersten Anbieter bzw. Hersteller bereitgestellt werden. Ferner gezeigt ist ein Nutzer 120 und ein Nutzerendgerät 130. Darüber hinaus ist ein digitaler Dienst 180 eines zweiten Anbieters bzw. eines Drittanbieters gezeigt. Für das IoT Gerät 153 ist auch ein herstellerspezifischer digitaler Dienst 190 zur Auswertung der von dem IoT Gerät 153 erfassten Daten gezeigt. All diese Komponenten sind mittelbar über den zentralen Datenspeicher 100 oder unmittelbar miteinander über jeweilige kommunikative Verbindungen miteinander vernetzt.

Der Tennisschläger 141 ist über eine geeignete Funktechnologie, bspw. über Bluetooth mit dem Nutzerendgerät 130 gekoppelt. Mittels einer auf dem Nutzerendgerät 130 implementierten Applikation können IoT Gerätedaten von dem Tennisschläger 141 erfasst und über das Nutzerendgerät 130 und dessen kommunikative Verbindung 131 zu dem zentralen Datenspeicher 100 übermittelt und dort in einem dem Tennisschläger 141 zugeordneten Sektor 101-1 für den Nutzer gespeichert werden. Ebenso können mittels einer weiteren oder der gleichen auf dem Nutzerendgerät 130 implementierten Applikation loT Gerätedaten von einem Turnschuh 142 erfasst und über das Nutzerendgerät 130 und dessen kommunikative Verbindung 131 zu dem zentralen Datenspeicher 100 übermittelt und dort in einem dem Turnschuh 142 zugeordneten Sektor 101-2 für den Nutzer 120 gespeichert werden. Um die jeweils erfassten Daten in dem zentralen Datenspeicher 100 abspeichern zu können, muss sich das Nutzerendgerät über die kommunikative Verbindung 131 bzw. bereits zu deren Aufbau bei dem zentralen Datenspeicher 100 jeweils authentifizieren. Erst dann können die erfassten Daten in die dazu vorgesehenen Sektoren 101-1 bzw. 101-2 geschrieben, d. h. abgespeichert werden.

Ein Auto 151 als weiteres IoT Gerät kann ferner über eine kommunikative Verbindung 161, zu deren Aufbau und/oder Nutzung sich das Auto 151 erst authentifizieren muss, von dem Auto 151 erfasste Daten, wie Geschwindigkeitsdaten, Beschleunigungsdaten etc. an den zentralen Datenspeicher 100 übertragen und dort in einem dem Auto 151 zugeordneten Sektor 102-1 für den Nutzer 120 abspeichern.

Ebenso kann eine Uhr des Nutzers 120, bspw. eine Smartwatch/Wearable 152 als weiteres IoT Gerät über eine kommunikative Verbindung 162, zu deren Aufbau und/oder Nutzung sich die Uhr 152 ebenfalls erst authentifizieren muss, von der Uhr 152 erfasste IoT Gerätedaten, darunter auch personenbezogene Daten des Nutzers 120, wie Puls des Nutzers, Schrittzahl des Nutzers etc. an den zentralen Datenspeicher 100 übertragen und dort in einem der Uhr 152 zugeordneten Sektor 102-2 für den Nutzer 120 abspeichern.

Ferner gezeigt ist eine (Überwachungs-)Kamera 153 des Nutzers 120 als weiteres IoT Gerät, das über eine kommunikative Verbindung 163, zu deren Aufbau und/oder Nutzung sich die Kamera 153 ebenfalls erst authentifizieren muss, von der Kamera 153 erfasste IoT Daten für den Nutzer 120, wie Bewegungsabläufe des Nutzers etc. an den zentralen Datenspeicher 100 übertragen und dort in einem der Kamera 153 zugeordneten Sektor 102-3 für den Nutzer 120 abspeichern.

Der Nutzer 120 hat generell, bspw. mittels seines Nutzerendgeräts 130 über eine kommunikative Verbindung 123 zu dem zentralen Datenspeicher 100 die Möglichkeit, die für ihn erfassten und auf dem zentralen Datenspeicher 100 hinterlegten IoT Gerätedaten, insbesondere seine personenbezogenen Daten, die von den einzelnen IoT Geräten in den jeweiligen ihnen jeweils zugeordneten Sektoren abgelegt sind, zu lesen und/oder zu löschen.

Ferner kann der Nutzer 120, bspw. ebenfalls über sein Nutzerendgerät 130 auswählen, ob er die IoT Gerätedaten, insbesondere seine personenbezogenen Daten, die von einem jeweiligen von ihm genutzten IoT Gerät erfasst wurden, von einer jeweiligen geräteherstellereigenen Auswerteapplikation und/oder von einem Drittanbieter auswerten lassen möchte. Für die von den IoT Geräten 141, 142 und 151 erfassten Daten, die in den jeweiligen den jeweiligen IoT Geräten zugeordneten Sektoren 101-1, 101-2, 102-1 abgelegt sind, wählt der Nutzer 120 hier bspw. einen Drittanbieter 180, der über eine kommunikative Verbindung 171 auf den Sektor 101-1 zugreifen kann. Dafür muss sich der Drittanbieter 180 allerdings erst authentifizieren bzw. durch den Nutzer 120 autorisiert werden. Der Drittanbieter 180 kann nun diese Daten bzw. eine Auswahl davon abrufen, aggregieren und gemeinsam auswerten. Ein Ergebnis der Auswertung kann sowohl dem Nutzer 120 über eine kommunikative Verbindung 122 als auch, nach Autorisierung durch den Nutzer 120, anderen Institutionen bereitgestellt werden. Dabei kann es sich um eine akustische, optische und/oder eine kombinierte akustisch-optische Ausgabe handeln.

In dem hier gezeigten Beispiel werden die von der Kamera 153 erfassten Daten, die in dem Sektor 102-3 auf dem zentralen Datenspeicher 100 gespeichert sind, von einer geräte- bzw. herstellereigenen Auswerteanwendung 190 über eine kommunikative Verbindung 174 ausgewertet. Im Gegensatz zu dem Drittanbieter 180, der über seine kommunikative Verbindung 171 die Daten nur lesend zugreifen kann, kann die Auswerteanwendung 190 nach Freigabe durch den Nutzer 120 auf die Daten sowohl lesend, als auch schreibend und sogar löschend zugreifen. Auch die geräte- bzw. herstellereigene Auswerteanwendung 190 stellt ein Ergebnis der Auswertung dem Nutzer 120 bereit, das dieser über eine kommunikative Verbindung 121 und ein geeignetes Ausgabegerät einsehen kann.

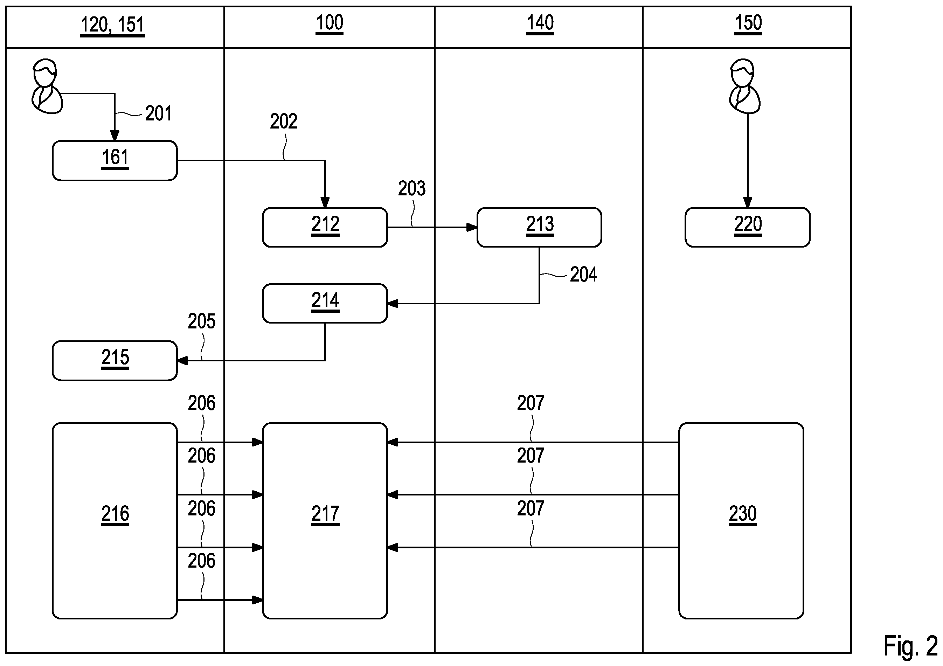

Figur 2 zeigt ein Flussdiagramm für eine beispielhafte Nutzung eines IoT Geräts zur Erfassung von IoT Gerätedaten für einen Nutzer und deren Speicherung unter Verwendung einer Ausführungsform der erfindungsgemäßen Anordnung mit dem zentralen Datenspeicher.

Kunde bzw. Nutzer 120 beschließt mit Schritt 201, das IoT Gerät 151 zur Erfassung von IoT Gerätedaten zu nutzen und aktiviert dazu das IoT Gerät 151. Das IoT Gerät 151 baut daraufhin in einem Schritt 202 eine kommunikative Verbindung 161 zu dem zentralen Datenserver 100 auf. Um die erfassten IoT Gerätedaten auf dem zentralen Datenspeicher 100 abspeichern zu können, muss sich das IoT Gerät 151 nun gegenüber dem zentralen Datenspeicher 100 erst authentifizieren. Dazu stellt das IoT Gerät 151 dem zentralen Datenspeicher 100 in einem Schritt 212 eine Identifikationsnummer zur Authentifizierung bereit. In einem Schritt 203 übermittelt der zentrale Datenspeicher 100 diese Identifikationsnummer an eine Verwaltungseinheit IDM (Telecommunication Network Identity Management) 140. Die Verwaltungseinheit 140 prüft in einem Schritt 213 die erhaltene Identifikationsnummer hinsichtlich einer hinterlegten Speicherberechtigung des damit verbundenen Nutzers auf dem zentralen Datenspeicher 100 und sendet in einem Schritt 204 eine Verifizierungsnachricht an den zentralen Datenspeicher 100. Der Datenspeicher 100 generiert in Schritt 214 einen Zugangsschlüssel für das IoT Gerät 151 mit Hilfe eines mit dem zentralen Datenspeicher 100 zumindest in kommunikativer Verbindung stehenden Zufallsgenerators. Der Zugangsschlüssel wird auf Basis einer dem IoT Gerät 151 eineindeutig zugeordneten IMSI (International Mobile Subscriber Identity), einer dem IoT Gerät 151 zugeordneten MAC (Media-Access-Control)-Adresse und eines Zeitstempels der aktuellen Nutzung des IoT Geräts 151 generiert. Der Zugangsschlüssel wird dann in einem Schritt 205 an das IoT Gerät 151 gesendet, das nunmehr konfiguriert (215) ist, Daten in dem zentralen Datenspeicher 100 zu speichern und das den Zugangsschlüssel in Folge zur Authentifizierung nutzt 216, um fortlaufend oder periodisch oder in beliebigen zeitlichen Abständen während der Nutzung des IoT Geräts 151 erfasste IoT Gerätedaten in einem dem IoT Gerät 151 zugeordneten Sektor auf dem zentralen Datenspeicher 100 zu schreiben 206 und dort zu speichern 217. Dabei kann das IoT Gerät 151 bspw. IPDR streaming benutzen, um die Daten an den zentralen Datenspeicher 100 zu übermitteln. Die von dem IoT Gerät 151 erfassten IoT Gerätedaten sind dann in dem zentralen Datenspeicher 100 gespeichert 217.

Alternativ zur direkten, d. h. unmittelbaren Authentifizierung des IoT Geräts 151 bei dem zentralen Datenspeicher 100, ist es auch denkbar, dass sich das IoT Gerät, das kein eigenes SIM-Profil hat, wie bspw. der Tennisschuh 141, eine auf dem mobilen Nutzerendgerät 130 zu installierende Anwendung bzw. Applikation nutzt, um sich darüber bei dem zentralen Datenspeicher 100 zu authentifizieren. Dazu installiert der Nutzer 120 in einem Schritt 220 die App 150 auf seinem Nutzerendgerät 130. Die App150 registriert sich bei dem zentralen Datenspeicher 100 mittels der Mobilfunksubskription des mobilen Nutzerendgeräts 130. Sodann wählt der Nutzer 120 mittels der App 150, das IoT Gerät 142, dessen erfassten Daten gelesen und in dem zentralen Datenspeicher 100 gespeichert werden sollen. Gleichzeitig kann die App 150 in einem Schritt 230 auch dazu dienen, die von dem IoT Gerät 142 erfassten Daten in ein oder mehreren Schritten 207 auszulesen und auszuwerten und auf einer Anzeigeeinheit anzuzeigen.

### Bezugszeichenliste

- 10: Anordnung
- 100: zentraler Datenspeicher
- 101-1: Tennisschläger zugeordneter Sektor
- 101-2: Turnschuh zugeordneter Sektor
- 102-1: Auto zugeordneter Sektor
- 102-2: Uhr zugeordneter Sektor
- 102-3: Kamera zugeordneter Sektor
- 120: Nutzer
- 121: kommunikative Verbindung
- 122: kommunikative Verbindung
- 123: kommunikative Verbindung
- 130: Nutzerendgerät
- 131: kommunikative Verbindung
- 140: Verwaltungseinheit
- 141: Tennisschläger als IoT Gerät
- 142: Turnschuh als IoT Gerät
- 150: Applikation
- 151: Auto als IoT Gerät
- 152: Uhr als IoT Gerät
- 153: Kamera als IoT Gerät
- 161: kommunikative Verbindung
- 162: kommunikative Verbindung
- 163: kommunikative Verbindung
- 171: kommunikative Verbindung
- 174: kommunikative Verbindung
- 180: digitaler Dienst
- 190: herstellerspezifischer digitaler Dienst
- 201 - 207: Verfahrensschritte
- 212 - 217: Verfahrensschritte
- 220, 230: Verfahrensschritte

## Patentansprüche

1. Verfahren zum Schützen von IoT Gerätedaten eines Nutzers (120), bei dem die IoT Gerätedaten von mindestens einem IoT Gerät (141, 142, 151, 152, 153) mindestens eines ersten Anbieters erfasst und in einem von einem als Übertragungsnetz implementierten Mobilfunknetz bereitgestellten zentralen Datenspeicher (100) gespeichert werden, wobei die IoT Gerätedaten des Nutzers Daten sind, die bei einer durch den Nutzer vorgenommenen Nutzung des mindestens einen IoT Geräts entstehen, wobei das mindestens eine IoT Gerät (141, 142, 151, 152, 153) zu einer Authentifizierung des mindestens einen IoT Geräts und damit einer Autorisierung zur Speicherung der IoT Gerätedaten dem zentralen Datenspeicher (100) eine Identifikationsnummer bereitstellt und der zentrale Datenspeicher (100) die Identifikationsnummer prüft und dem mindestens einen IoT Gerät (141, 142, 151, 152, 153) nach Verifizierung der Identifikationsnummer einen Speicherbereich (101-1, 101-2, 102-1, 102-2, 102-3) zur Speicherung der IoT Gerätedaten bereitstellt, bei dem das mindestens eine IoT Gerät (141, 142, 151, 152, 153) zur Authentifizierung bei dem Mobilfunknetz ein einem mit dem mindestens einen IoT Gerät (141, 142, 151, 152, 153) über eine Anwendung in kommunikativer Verbindung stehenden mobilen Nutzerendgerät (130) zugeordnetes SIM-Profil nutzt, wobei die Anwendung auf dem mobilen Nutzerendgerät (130) implementiert wird.

2. Verfahren nach Anspruch 1, bei dem eine mit dem zentralen Datenspeicher (100) in kommunikativer Verbindung stehende Verwaltungseinheit (140) die bereitgestellte Identifikationsnummer überprüft, wobei die Verwaltungseinheit (140) über die kommunikative Verbindung dem zentralen Datenspeicher (100) eine Nachricht bezüglich einer Verifizierung oder einer Nicht-Verifizierung der Identifikationsnummer übermittelt.

3. Verfahren nach einem der voranstehenden Ansprüche, bei dem der zentrale Datenspeicher (100) nach Verifizierung der Identifikationsnummer jeweils einen zumindest temporären Zugangsschlüssel für das mindestens eine IoT Gerät (141, 142, 151, 152, 153) generiert und an das mindestens eine IoT Gerät (141, 142, 151, 152, 153) übermittelt, wodurch das mindestens eine IoT Gerät (141, 142, 151, 152, 153) dazu konfiguriert wird, die erfassten IoT Gerätedaten auf dem zentralen Datenspeicher (100) in dem dem mindestens einen IoT Gerät (141, 142, 151, 152, 153) jeweils zugewiesenen Speicherbereich (101-1, 101-2, 102-1, 102-2, 102-3) zu speichern.

4. Verfahren nach einem der voranstehenden Ansprüche, bei dem der Nutzer (120) auf die gespeicherten IoT Gerätedaten zumindest lesend und löschend zugreifen kann.

5. Verfahren nach einem der voranstehenden Ansprüche, bei dem ein jeweiliges IoT Gerät (141, 142, 151, 152, 153) einer Mehrzahl von IoT Geräten (141, 142, 151, 152, 153) jeweilige IoT Gerätedaten erfasst und in einer jeweiligen dem jeweiligen IoT Gerät (141, 142, 151, 152, 153) zugeordneten Sektion (101-1, 101-2, 102-1, 102-2, 102-3) gerätespezifisch abspeichert, wobei das jeweilige IoT Gerät (141, 142, 151, 152, 153) definiert, wie die IoT Gerätedaten in der dem jeweiligen IoT Gerät (141, 142, 151, 152, 153) zugeordneten Sektion (101-1, 101-2, 102-1, 102-2, 102-3) gespeichert werden.

6. Verfahren nach einem der voranstehenden Ansprüche, bei dem ein digitale Dienst mindestens eines zweiten Anbieters nach Autorisierung einen Zugang zu den auf dem zentralen Datenspeicher (100) gespeicherten und von dem mindestens einen IoT Gerät (141, 142, 151, 152, 153) erfassten IoT Gerätedaten erhält und zumindest einen Teil der Daten aggregiert, verknüpft, auswertet und dem Nutzer (120) mittels eines Nutzerendgerätes (130) ein Ergebnis der Auswertung der aggregierten und miteinander verknüpften Daten bereitstellt.

7. Verfahren nach Anspruch 6, bei dem das Ergebnis der Auswertung in einer dem digitalen Dienst zugeordneten Sektion des zentralen Datenspeichers (100) gespeichert wird.

8. Verfahren nach einem der Ansprüche 6 oder 7, bei dem der Nutzer (120), durch eine Nutzereingabe in das mindestens eine Nutzerendgerät (130), vorgibt, welcher mindestens eine Dienst des mindestens einen Anbieters durch jeweilige Autorisierung Zugang zu mindestens einer jeweiligen Auswahl von den auf dem zentralen Datenspeicher (100) gespeicherten Daten des mindestens einen IoT Geräts (141, 142, 151, 152, 153) erhält.

9. Anordnung zum Schützen von IoT Gerätedaten eines Nutzers (120), mit mindestens einem IoT Gerät (141, 142, 151, 152, 153) eines ersten Anbieters, das dazu konfiguriert ist, IoT Gerätedaten zu erfassen, sich bei einem von einem als Übertragungsnetz implementierten Mobilfunknetz bereitgestellten zentralen Datenspeicher (100) zur Speicherung der IoT Gerätedaten zu authentifizieren und nach Authentifizierung die erfassten IoT Gerätedaten in dem zentralen Datenspeicher (100) zu speichern, wobei die IoT Gerätedaten des Nutzers Daten sind, die bei einer durch den Nutzer vorgenommenen Nutzung des mindestens einen IoT Geräts entstehen, mit dem zentralen Datenspeicher (100), der dazu ausgelegt ist, die von dem mindestens einen IoT Gerät (141, 142, 151, 152, 153) erfassten Daten zu speichern, wobei das mindestens eine IoT Gerät (141, 142, 151, 152, 153) dazu konfiguriert ist, zur Authentifizierung des mindestens einen IoT Geräts (141, 142, 151, 152, 153) und damit einer Autorisierung zur Speicherung der IoT Gerätedaten dem zentralen Datenspeicher eine Identifikationsnummer bereitzustellen und der zentrale Datenspeicher (100) dazu konfiguriert ist, die Identifikationsnummer zu prüfen und dem mindestens einen IoT Gerät (141, 142, 151, 152, 153) nach Verifizierung der Identifikationsnummer einen Speicherbereich (101-1, 101-2, 102-1, 102-2, 102-3) zur Speicherung der IoT Gerätedaten bereitzustellen, wobei das mindestens eine IoT Gerät (141, 142, 151, 152, 153) zur Authentifizierung bei dem Mobilfunknetz ein einem mit dem mindestens einen IoT Gerät (141, 142, 151, 152, 153) über eine Anwendung in kommunikativer Verbindung stehenden mobilen Nutzerendgerät (130) zugeordnetes SIM-Profil nutzt, wobei die Anwendung auf dem mobilen Nutzerendgerät (130) implementiert ist.

10. Anordnung nach Anspruch 9, bei dem der zentrale Datenspeicher (100) dazu konfiguriert ist, mindestens eine Auswahl der gespeicherten Daten für mindestens einen digitalen Dienst von mindestens einem zweiten Anbieter nach Autorisierung abrufbar zugänglich zu machen.

11. Anordnung nach einem der Ansprüche 9 oder 10, bei dem der zentrale Datenspeicher (100) dazu konfiguriert ist, nach Verifizierung der Identifikationsnummer einen zumindest temporären Zugangsschlüssel zur Speicherung von dem jeweiligen IoT Gerät (141, 142, 151, 152, 153) erfassten IoT Gerätedaten zu generieren und an das IoT Gerät (141, 142, 151, 152, 153) des Nutzers (120) zu übermitteln, und den temporären Zugangsschlüssel nach Beendigung der aktuellen Nutzung für das jeweilige IoT Gerät (141, 142, 151, 152, 153) ungültig zu machen.

12. Computerprogrammprodukt mit einem computerlesbaren Medium und einem auf dem computerlesbaren Medium gespeicherten Computerprogramm mit Programmcodemitteln, die dazu konfiguriert sind, bei Ablauf des Computerprogramms auf jeweiligen Recheneinheiten ein Verfahren nach einem der Ansprüche 1 bis 8, unter Verwendung einer Anordnung nach einem der Ansprüche 9 bis 11 auszuführen.

## Claims

1. A method for protecting loT device data of a user (120), in which the loT device data are acquired by at least one loT device (141, 142, 151, 152, 153) of at least one first provider and stored in a central data memory (100) provided by a mobile network implemented as a transmission network, wherein the loT device data of the user are data generated by use of the at least one loT device by the user, wherein the at least one loT device (141, 142, 151, 152, 153) provides an identification number to the central data memory (100) for authenticating the at least one loT device and thus for authorizing the storing of the loT device data, and the central data memory (100) checks the identification number and, upon verification of the identification number, provides the at least one loT device (141, 142, 151, 152, 153) with a memory area (101-1, 101-2, 102-1, 102-2, 102-3) for storing the loT device data, the at least one loT device (141, 142, 151, 152, 153), for authentication to the mobile network, using a SIM profile assigned to a mobile user terminal (130) which is in communicative connection with the at least one loT device (141, 142, 151, 152, 153) via an application, wherein the application is implemented on the mobile user terminal (130).

2. The method of claim 1, in which a management unit (140) in communicative connection with the central data memory (100) checks the provided identification number, wherein the management unit (140) transmits a message regarding a verification or a non-verification of the identification number to the central data memory (100) via the communicative connection.

3. The method of one of the preceding claims, in which the central data memory (100), upon verification of the identification number, respectively generates and transmits to the at least one loT device (141, 142, 151, 152, 153) an at least temporary access key for the at least one loT device (141, 142, 151, 152, 153), whereby the at least one loT device (141, 142, 151, 152, 153) is configured to store the acquired loT device data on the central data memory (100) in the memory area (101-1, 101-2, 102-1, 102-2, 102-3) respectively assigned to the at least one loT device (141, 142, 151, 152, 153).

4. The method of one of the preceding claims, in which the user (120) has at least read and delete access to the stored loT device data.

5. The method of one of the preceding claims, in which a respective loT device (141, 142, 151, 152, 153) of a plurality of loT devices (141, 142, 151, 152, 153) acquires respective loT device data and stores them in a device specific manner in a respective section (101-1, 101-2, 102-1, 102-2, 102-3) assigned to the respective loT device (141, 142, 151, 152, 153), wherein the respective loT device (141, 142, 151, 152, 153) defines how the loT device data are stored in the section (101-1, 101-2, 102-1, 102-2, 102-3) assigned to the respective loT device (141, 142, 151, 152, 153).

6. The method of one of the preceding claims, in which, upon authorization, a digital service of at least one second provider obtains access to the loT device data stored on the central data memory (100) and acquired by the at least one loT device (141, 142, 151, 152, 153) and aggregates, links, evaluates at least a portion of the data, and provides to the user (120) a result of the evaluation of the aggregated and linked data by means of a user terminal (130).

7. The method of claim 6, in which the result of the evaluation is stored in a section of the central data memory (100) assigned to the digital service.

8. The method of one of claims 6 or 7, in which the user (120), by a user input to the at least one user terminal (130), specifies which at least one service of the at least one provider is given access to at least one respective selection of the data of the at least one loT device (141, 142, 151, 152, 153) stored on the central data memory (100) by respective authorization.

9. An arrangement for protecting loT device data of a user (120), having at least one loT device (141, 142, 151, 152, 153) of a first provider configured to acquire loT device data, authenticate itself to a central data memory (100) provided by a mobile network implemented as a transmission network for storing the loT device data, and, upon authentication, store the acquired loT device data in the central data memory (100), wherein the loT device data of the user are data generated by use of the at least one loT device by the user, having the central data memory (100) configured to store the data acquired by the at least one loT device (141, 142, 151, 152, 153), wherein the at least one loT device (141, 142, 151, 152, 153) is configured to provide an identification number to the central data memory for authenticating the at least one loT device (141, 142, 151, 152, 153) and thus for authorizing the storing of the loT device data, and the central data memory (100) is configured to check the identification number and, upon verification of the identification number, to provide the at least one loT device (141, 142, 151, 152, 153) with a memory area (101-1, 101-2, 102-1, 102-2, 102-3) for storing the loT device data, wherein the at least one loT device (141, 142, 151, 152, 153), for authentication to the mobile network, uses a SIM profile assigned to a mobile user terminal (130) that is in communicative connection with the at least one loT device (141, 142, 151, 152, 153) via an application, wherein the application is implemented on the mobile user terminal (130).

10. The arrangement of claim 9, in which the central data memory (100) is configured to make at least one selection of the stored data retrievably accessible to at least one digital service of at least one second provider upon authorization.

11. The arrangement of one of claims 9 or 10, in which the central data memory (100) is configured to generate and transmit to the loT device (141, 142, 151, 152, 153) of the user (120), upon verification of the identification number, an at least temporary access key for storing loT device data acquired from the respective loT device (141, 142, 151, 152, 153), and to invalidate the temporary access key for the respective loT device (141, 142, 151, 152, 153) upon termination of the current use.

12. A computer program product with a computer-readable medium and a computer program with program code means stored on said computer-readable medium, said program code means being configured to carry out a method according to one of claims 1 to 8, using an arrangement according to one of claims 9 to 11, when said computer program is executed on respective computing units.

## Revendications

1. Procédé de protection des données d'appareils IoT d'un utilisateur (120), consistant à enregistrer les données d'appareils IoT provenant d'au moins un appareil IoT (141, 142, 151, 152, 153) d'au moins un premier fournisseur et à les stocker dans une mémoire centrale de données (100), fournie par un réseau de téléphonie mobile implémenté en tant que réseau de transmission, les données d'appareils IoT de l'utilisateur étant les données qui résultent d'une utilisation de l'au moins un appareil IoT, entreprise par l'utilisateur, l'au moins un appareil IoT (141, 142, 151, 152, 153) fournissant à la mémoire centrale de données (100) un numéro d'identification à la fois pour une authentification de l'au moins un appareil IoT et, ce faisant, pour une autorisation de la mise en mémoire des données d'appareils IoT, et la mémoire centrale de données (100) vérifiant le numéro d'identification et fournissant à l'au moins un appareil IoT (141, 142, 151, 152, 153) après vérification du numéro d'identification une zone de mémoire (101-1, 101-2, 102-1, 102-2, 102-3) aux fins de la mise en mémoire des données d'appareils IoT, l'au moins un appareil IoT (141, 142, 151, 152, 153) utilisant un profil SIM associé à un terminal d'utilisateur (130) qui communique avec l'au moins un appareil IoT (141, 142, 151, 152, 153) via une application aux fins de l'authentification dans le réseau de téléphonie mobile, ladite application étant implémentée sur le terminal d'utilisateur (130) mobile.

2. Procédé selon la revendication 1, pour lequel une unité d'administration (140) communiquant avec la mémoire centrale de données (100) vérifie le numéro d'identification fourni, l'unité d'administration (140) transmettant à la mémoire centrale de données (100) par l'intermédiaire de la connexion de communication un message concernant une vérification réussie ou échouée du numéro d'identification.

3. Procédé selon l'une des revendications précédentes, pour lequel la mémoire centrale de données (100) génère à chaque fois, après vérification du numéro d'identification, une clé d'accès au moins temporaire pour l'au moins un appareil IoT (141, 142, 151, 152, 153) et la transmet à l'au moins un appareil IoT (141, 142, 151, 152, 153), ce qui permet de configurer l'au moins un appareil IoT (141, 142, 151, 152, 153) pour stocker les données d'appareils IoT enregistrées dans la mémoire centrale de données (100) dans la zone de mémoire (101-1, 101-2, 102-1, 102-2, 102-3) associée à l'au moins un appareil IoT (141, 142, 151, 152, 153).

4. Procédé selon l'une des revendications précédentes, pour lequel l'utilisateur (120) peut accéder aux données d'appareils IoT stockées, au moins en mode de lecture et d'effacement.

5. Procédé selon l'une des revendications précédentes, pour lequel un appareil IoT (141, 142, 151, 152, 153) faisant partie d'une pluralité d'appareils IoT (141, 142, 151, 152, 153) enregistre des données d'appareil IoT et les stocke de manière spécifique pour l'appareil dans une section (101-1, 101-2, 102-1, 102-2, 102-3) associée à l'appareil IoT (141, 142, 151, 152, 153), ledit appareil IoT (141, 142, 151, 152, 153) définissant la manière de stocker les données d'appareils IoT dans la section (101-1, 101-2, 102-1, 102-2, 102-3) associée à l'appareil IoT (141, 142, 151, 152, 153).

6. Procédé selon l'une des revendications précédentes, pour lequel un service numérique d'au moins un deuxième fournisseur reçoit après autorisation un accès aux données d'appareils IoT stockées dans la mémoire centrale de données (100) et enregistrées par l'au moins un appareil IoT (141, 142, 151, 152, 153) et agrège, combine, analyse au moins une partie des données et fournit à l'utilisateur (120), au moyen d'un terminal d'utilisateur (130), un résultat de son analyse des données agrégées et combinées.

7. Procédé selon la revendication 6, pour lequel le résultat de l'analyse est stocké dans une section de la mémoire centrale de données (100), ladite section étant associée au service numérique.

8. Procédé selon l'une des revendications 6 ou 7, pour lequel l'utilisateur (120) saisit sur l'au moins un terminal d'utilisateur (130) lequel au moins un service de l'au moins un fournisseur reçoit l'accès au moyen de l'autorisation correspondante à l'au moins une sélection de données de l'au moins un appareil IoT (141, 142, 151, 152, 153), stockées dans la mémoire centrale de données (100).

9. Dispositif de protection des données d'appareils IoT d'un utilisateur (120), doté d'au moins un appareil IoT (141, 142, 151, 152, 153) d'un premier fournisseur, configuré de manière à enregistrer des données d'appareils IoT, à s'authentifier dans une mémoire centrale de données (100) fournie par un réseau de téléphonie mobile implémenté en tant que réseau de transmission aux fins de la mise en mémoire des données d'appareils IoT et à mettre en mémoire, après authentification, les données d'appareils IoT enregistrées dans la mémoire centrale de données (100), les données d'appareils IoT de l'utilisateur étant les données qui résultent d'une utilisation de l'au moins un appareil IoT entreprise par l'utilisateur, de la mémoire centrale de données (100), conçue de manière à stocker les données enregistrées par l'au moins un appareil IoT (141, 142, 151, 152, 153), l'au moins un appareil IoT (141, 142, 151, 152, 153) étant configuré pour fournir à la mémoire centrale de données un numéro d'identification pour l'authentification de l'au moins un appareil IoT (141, 142, 151, 152, 153) et, ce faisant, pour une autorisation de la mise en mémoire des données d'appareils IoT et la mémoire centrale de données (100) étant configurée pour vérifier le numéro d'identification et fournir à l'au moins un appareil IoT (141, 142, 151, 152, 153), après vérification du numéro d'identification, une zone de mémoire (101-1, 101-2, 102-1, 102-2, 102-3) aux fins de la mise en mémoire des données d'appareils IoT, l'au moins un appareil IoT (141, 142, 151, 152, 153) utilisant un profil SIM associé à un terminal d'utilisateur (130) qui communique avec l'au moins un appareil IoT (141, 142, 151, 152, 153) via une application aux fins de l'authentification dans le réseau de téléphonie mobile, ladite application étant implémentée sur le terminal d'utilisateur (130) mobile.

10. Dispositif selon la revendication 9, dans lequel la mémoire centrale de données (100) est configurée de manière à rendre accessible au moins une sélection des données stockées, pour au moins un service numérique d'un deuxième fournisseur après réception de l'autorisation.

11. Dispositif selon l'une des revendications 9 ou 10, dans lequel la mémoire centrale de données (100) est configurée de manière à générer, après vérification du numéro d'identification, une clé d'accès au moins temporaire pour le stockage de données d'appareils IoT enregistrées par l'appareil IoT (141, 142, 151, 152, 153) correspondant et à la transmettre à l'appareil IoT (141, 142, 151, 152, 153) de l'utilisateur (120) et à invalider la clé d'accès temporaire à l'issue de l'utilisation actuelle pour l'appareil IoT (141, 142, 151, 152, 153) correspondant.

12. Produit de programme informatique doté d'un support lisible par ordinateur et d'un programme informatique stocké sur le support lisible par ordinateur, comportant des moyens de code de programme configurés de manière à réaliser sur des unités de calcul correspondantes, lors de l'exécution du programme informatique, un procédé selon l'une des revendications 1 à 8 au moyen d'un dispositif selon l'une des revendications 9 à 11.
